# EUROPEAN PATENT SPECIFICATION

(11) **EP 1 279 555 B1**
(45) Date of publication and mention of the grant of the patent: **20.09.2006**
(21) Application number: 02024645.0
(22) Date of filing: 02.03.2000
(51) Int. Cl.: B60N 2/58, B60R 21/20

(54) **Seat assembly for a vehicle**
Sitzeinheit für Fahrzeuge
Ensemble de siège pour véhicule

(30) Priority: 05.03.1999 US 123046 P
(43) Date of publication of application: 29.01.2003
(62) Divisional of application: 00907393.3
(73) Proprietor: Magna Seating Systems Inc., Aurora, Ontario L4G 7K1 (CA)
(72) Inventor: Holdampf, Carl J., Farmington Hills, MI 48335 (US); Homier, Robert I., Plymouth, MI 48170 (US); Bednarski, Matthew M., Brighton, MI 48114 (US)
(74) Representative: Hössle Kudlek & Partner

(56) References cited:
- WO-A-98/21063
- US-A- 5 597 176
- US-A- 5 967 603

## Description

### Related Application

The subject patent application is a divisional application to the European patent application 00 907 393.3.

### Field of the Invention

The subject invention relates to a seat assembly for a vehicle including a side air bag unit and, more specifically, to an interlocking fastener for securing an intensifier sleeve surrounding the air bag unit.

### Background of the Invention

Side impact air bag units that inflate an air bag laterally or to the side of a seat assembly are well known in the prior art. The seat assemblies typically include a seat cover sewn together from a number of separate trim pieces for encapsulating the seat frame and the air bag unit. During deployment of the air bag, the air bag exits through one of the seams in the trim cover.

An intensifier sleeve is frequently used to guide the air bag during deployment. In particular, intensifier sleeves include a pair of sleeve sheets sandwiching the air bag therebetween. Each of the sheets presents a first edge and a second edge. The first edges are sewn into the seam of the trim cover. The second edges are supported by the seat frame. The intensifier sleeve therefore directs the air bag toward the seam of the trim cover such that the air bag will correctly and completely deploy through the seam. An example of such a prior art seat assembly is disclosed in U.S. Patent 5 967 546 to Homier et al., two of the same inventors named herein.

Side impact air bag units employing an intensifier sleeve are housed within a relatively small area in the side of the seat assembly. During the installation of the intensifier sleeve and air bag unit, it is frequently a challenge to accurately and securely mount the intensifier sleeve to the seat frame. A number of different installation techniques have been developed. One basic method of supporting the intensifier sleeve is disclosed in U.S. Patent No. 5 588 670 to Storey et al., which merely discloses a pair of basic clamps. These clamps do not provide an easy, quick and error free installation of the intensifier sleeve. Another design for supporting the intensifier sleeve is disclosed in U.S. Patent No. 5 967 546 to Homier et al. The Homier '546 patent discloses a wire interconnecting two distal ends of the sleeve opposite the seam of the trim cover. This method of attachment, however, may be cumbersome, difficult and time consuming to install considering the confined spaces of the seat assembly.

One improved attachment method provided by the prior art is shown in U.S. Patent No. 5 967 603 to Genders et al. The Genders et al. '603 patent discloses a pair of J-shaped hooks attached to the distal ends of the intensifier sleeve. The hooks, however, may he improperly installed such that only a portion of the hooks are interleaved with each other. Further, the hooks may slide or otherwise move relative to each other such that only a small portion of the hooks remain engaged or the hooks disengage entirely.

If the airbag was to deploy when the hooks were only partially engaged or disengaged, the purpose and function of the intensifier sleeve would be defeated such that the airbag may not correctly or completely deploy through the seam in the seat. Further, even if the hooks of the '603 patent were properly interleaved, there are no devices on the hooks to prevent the hooks from sliding or otherwise moving relative to each other and then disconnecting during deployment of the airbag.

An object of this invention is to provide a seat assembly including an air bag until having an intensifier sleeve that can be quickly and easily supported around a seat frame. Another object of this invention is to provide a seat assembly including an air bag unit having a fastener means that ensures that an intensifier sleeve is correctly attached to a seat frame and that the fastener remains attached to the seat frame during the life of the seat assembly.

### Summary of the Invention and Advantages

In view of the above objects, the subject invention provides a seat assembly with the features of claim 1.

Accordingly, the subject invention provides a seat assembly including an air bag unit having a fastener that enables an intensifier sleeve to be quickly, easily and properly supported by a seat frame.

### Brief Description of the Drawings

Other advantages of the present invention will be readily appreciated as the same becomes better understood by reference to the following detailed description when considered in connection with the accompanying drawings wherein:
- Figure: 1 is a perspective view of a vehicle seat assembly according to this invention incorporating a side impact air bag unit;
- Figure 2: a fragmentary perspective view of the side impact air bag unit incorporating an interlocking fastener of the subject invention;
- Figure 3: is a view similar to Figure 2 with the components thereof in an exploded relationship;
- Figure 4: is an enlarged fragmentary perspective view of a portion of an intensifier sleeve stitched into a seam of a trim cover;
- Figure 5: is an enlarged cross sectional view taken along line 5-5 of Figure 2.
- Figure 6: is a perspective view of the fastener having outboard and inboard portions;
- Figure 7: is a front view of the inboard portion of the fastener shown in Figure 6;
- Figure 8: is an end view of the fastener taken along line 8-8 of Figure 7;
- Figure 9: is a sectional view taken along line 9-9 of Figure 7;
- Figure 10: is a sectional view taken along line 10-10 of Figure 7;
- Figure 11: is a sectional view taken along line 11-11 of Figure 7; and
- Figure 12: is a perspective view of an alternative embodiment of the fastener.

### Detailed Description of the Preferred Embodiment

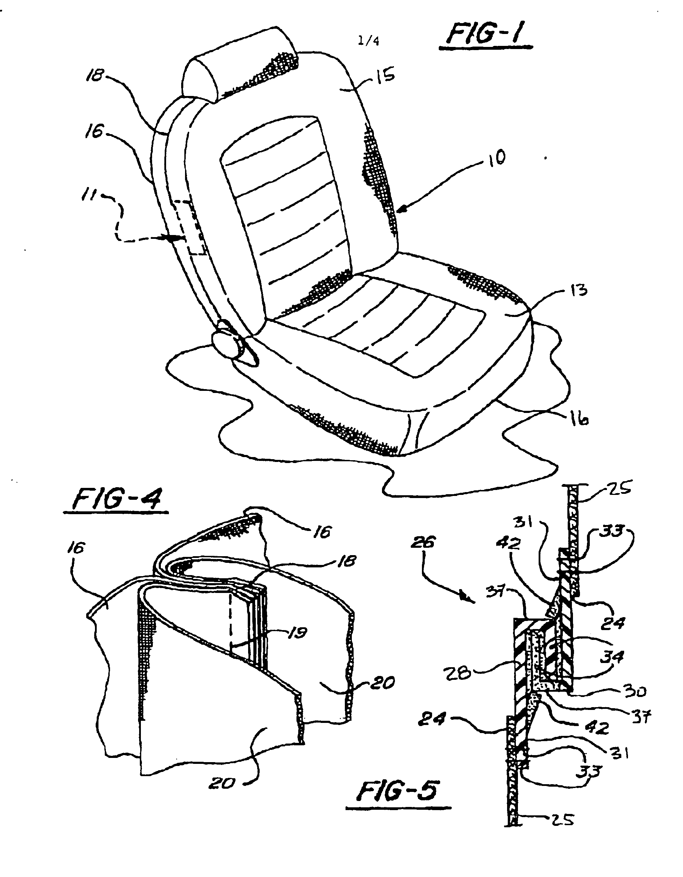

Referring to the Figures, wherein like numerals indicate like or corresponding parts throughout the several views, a vehicle seat assembly is generally shown at 10 in Figure 1. The seat assembly 10 includes a side impact air bag unit 11. The air bag unit 11 illustrated deploys from the side or bolster section of the seat assembly 10 in order to protect the occupant from side impacts. As will be appreciated, the subject invention may be used for other air bag unit configurations and locations.

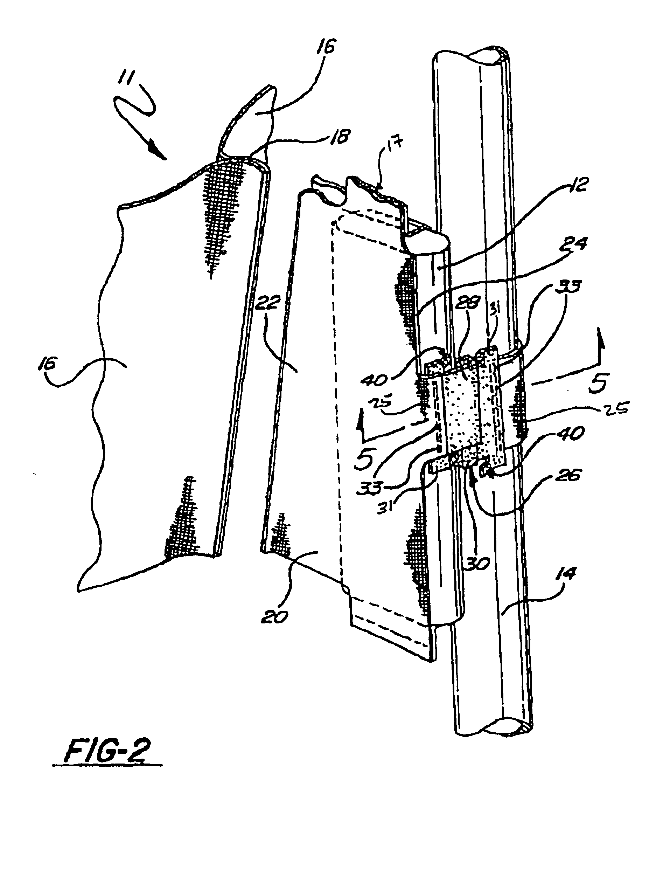

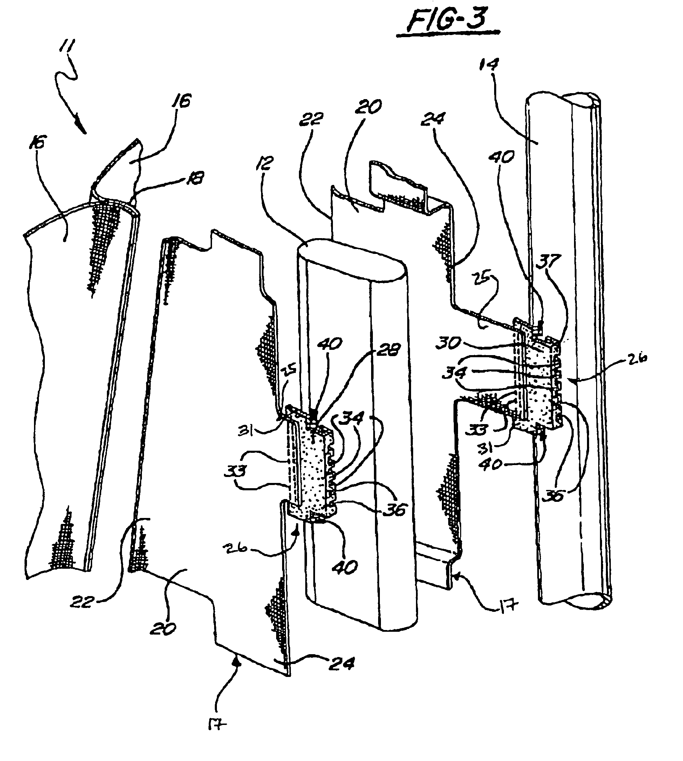

The seat assembly 10 also includes a seat cushion 13 and a seat back 15 with both the cushion 13 and back 15 covered by a cover 16. The cover 16 may be of any suitable material such as cloth, leather, vinyl or the like. As is known in the seat manufacturing art, the covers 16 is typically formed of a number of separate trim pieces which are sewn together defining a plurality of seams 18. In particular, the seams 18 are defined by stitches 19. As will be appreciated, the subject invention is by no way limited to a particular type, style or design of seat assembly 10. Referring to Figures 2 and 3, the air bag unit 11 includes an air bag canister 12 which is mounted to a seat frame 14. The seat frame 14 is shown as a tubular member.

Alternatively, the seat frame 14 may be of any suitable construction. The seat frame 14 is part of an overall seat frame that forms corresponding parts of the seat cushion 13 and seat back 15.

The air bag canister 12 of the subject invention includes an opening (not shown) wherein an air bag (not shown) is designed to deploy through the cover 16 covering the seat frame 14. Specifically, the air bag is designed to deploy through the seam 18 defined by the stitch 19 connecting two pieces of the cover material 16. The particular design, size or configuration of the air bag canister 12 and air bag are in no way limited by the illustrated embodiment.

An intensifier sleeve 17 surrounds the opening and the air bag to direct the air bag into the seam 18 of the cover 16. The intensifier sleeve 17 is defined by two sheets or pieces 20 wherein each piece or sheet 20 has a first end or edge 22 and a second end or edge 24.

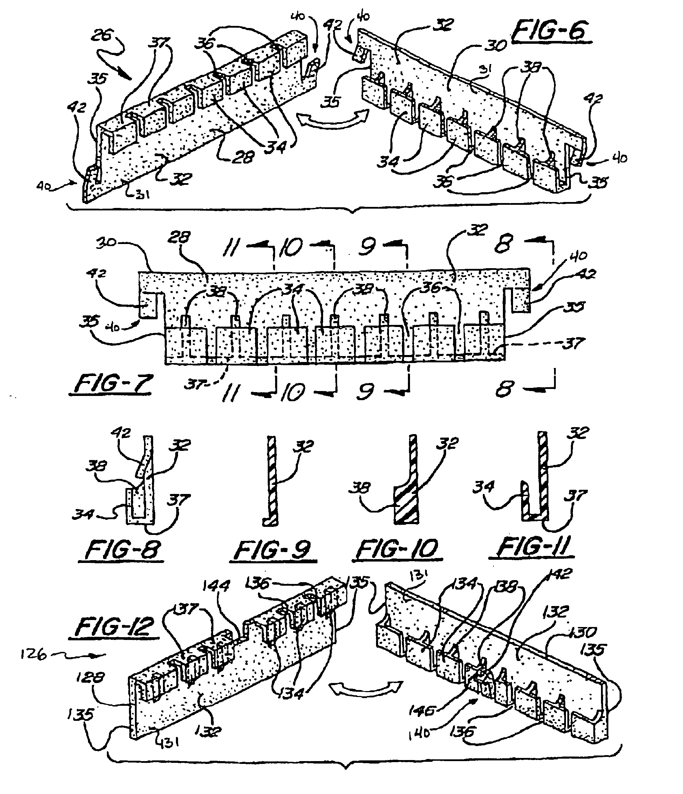

For illustrative purposes, Figures 2 and 3 show the seam 18 of the cover 16 in a spaced relationship from the first ends 22 of the sleeve sheets 20. As appreciated, the first ends 22 of the sheets 20 would be stitched together in a sandwiched fashion with the seam 18 on the cover 16. The preferred stitching configuration is best shown in Figure 4. The sheets 20, however, may be affixed to the seam 18 of the cover 16 by any suitable means.

The sheets 20 of the intensifier sleeve 17 are preferably made of a nylon type material which is stronger than the stitch 19 of the cover 16 and the air bag itself. The strength of the sheets 20 is particularly important during the deployment of the air bag.

During deployment, the air bag expands in a quick and volatile manner. The intensifier sleeve 17 directs the air bag toward the seam 18 of the cover 16. The expansion forces load the sheets 20 of the intensifier sleeve 17 in tension such that the seam 18 of the cover 16 tears open as the stitch 19 breaks. This opens a path for the air bag to follow as the air bag emerges from the seat assembly 10 to a fully deployed position. This type of deployment is known in the art as is discussed in the background section.

Due to the volatile nature of the air bag deployment, the sheets 20 of the intensifier sleeve 17 should be securely supported by the seat frame 14. Preferably, the second ends 24 of the two sheets 20 each include extensions or tabs 25 which extend around the air bag canister 12 and are connected together around the seat frame 14. As illustrated, one of the extensions 25 may be longer than the other extension 25 in order to surround the desired portion of the seat frame 14.

An interlocking or self-locking fastener, generally shown at 26, securely supports the two second ends 24 of the intensifier sleeve 17 around the seat frame 14. As will be appreciated, the fastener 26 may be used in a variety of environments and the side impact air bag unit 11 is simply illustrative of one environment. Other environments may include different air bag unit configurations, air bag unit positions, seat trim attachments around seat cushions and seat backs, and/or cover attachments.

The fastener 26 includes an elongated outboard portion 28 and an elongated inboard portion 30 which interlock together. Preferably, the outboard 28 and inboard 30 portions are identical to each other which reduces the possibility of installation error. The portions 28, 30, however, are in no way limited to being identical, such as will be discussed in greater detail below with reference to an alternative embodiment.

Referring also to Figures 5 through 11, the preferred embodiment of the outboard 28 and inboard 30 portions is shown in greater detail. The inboard 30 and outboard 28 portions each include a back panel 32 extending in a strip between opposite distal ends 35. A plurality of J-shaped hooks 34 preferably extend across the entire length of and between the ends 35 of each back panel 32. Preferably, the J-shaped hooks 34 are disposed in a side by side relationship between the opposite ends 35. The back panels 32 have upper and lower edges with the upper edge extending beyond the J-shaped hooks 34 to provide a flat connecting section 31 along the upper edge.

As best shown in Figures 1 and 5, the flat connection section 31 of the outboard portion 28 is sewn by stitches to one of the second ends 24 of the sleeve sheet 20. The stitches formed by the outboard portion 28 and the second end 24 of the intensifier sleeve 17 define a seam 33. Similarly, the flat connecting section 31 of the inboard portion 30 is sewn by stitches to the other second end 24 of the other sleeve sheet 20. The stitches formed by the inboard portion 30 and the other second end 24 of the corresponding sheet 20 likewise define a seam 33. Hence, the seams 33 connect the back panels 32 of the outboard 28 and inboard 30 portions to the respective second edges 24 of the sleeve sheets 20. The outboard 28 and inboard 30 portions may, however, be secured to the respective ends of the intensifier sleeve sheets 20 by any suitable means, including an adhesive, rivets or the like.

A plurality of slots 36 are formed between the hooks 34 to provide separation between adjacent hooks 34. A support rib 38 extends from the back panel 32 to each of the hooks 34 to provide support for the corresponding hook 34 in spaced relationship to the back panel 32. Preferably, the ribs 38 are centrally located on each of the hooks 34. The J-shaped hooks 34 include a base 37 for engaging opposing J-shaped hooks 34 of an opposing back panel 34. It should be appreciated that the exact configuration of the hooks 34 as described above may be modified without deviating from the overall scope of the subject invention.

A mechanical locking device 40 is disposed on at least one of the panels 32 of the portions 28, 30 for locking the outboard 28 and inboard 30 portions together. The locking device 40 includes at least one resilient locking finger 42 extending outwardly from at least one of the opposite ends 35 of the panels 32. Preferably, the locking device 40 includes a resilient locking finger 42 extending from each of the opposite ends 35 at the upper edges of each of the panels 32. Hence, both the outboard 28 and inboard 30 portions include a pair of locking fingers 42. The locking fingers 42 are resiliently formed inwardly toward the J-shaped hooks 34. The particular configuration and number of locking devices 40 may be modified without deviating from the overall scope of the subject invention.

To interconnect the outboard 28 and inboard 30 portions, the J-shaped hooks 34 on the back panel 32 of the outboard portion 28 are interleaved with the J-shaped hooks 34 on the back panel 32 of the inboard portion 30. In particular, the ribs 38 of the outboard portion 28 are disposed in the slots 36 of the inboard portion 30 and similarly the ribs 38 of the inboard portion 30 are disposed in the slots 36 of the outboard portion 28.

Once interlocked, the ribs 38 and slots 36 of the outboard portion 28 are shifted from the ribs 38 and slots 36 of the inboard portion 30 such that the inboard 30 and outboard 28 portions may be locked together. In other words, when a user locks the two portions 28, 30 together, the hooks 34 engage each other and the ribs 38 engage the corresponding slots 36. This rib 38 and slot 36 engagement prevents the inboard 30 and outboard 28 portions from sliding end to end relative to each other. Figures 8-11 illustrate various sectional views of the J-shaped hook 34, rib 38, and slot 36.

The locking of the inboard 30 and outboard 28 portions occurs because of the locking fingers 42. Specifically, as a user pushes the two portions 28, 30 together, the corresponding hooks 34 engage each other and the ribs 38 engage the corresponding slots 36. As the corresponding hooks 34 slide into engagement, the fingers 42 are pushed toward the respective back panel 32. Specifically, the hooks 34 of the inboard portion 30 that are directly adjacent the ends 35 push against the fingers 42 of the outboard portion 28. Similarly, the hooks 34 of the outboard portion 28 that are directly adjacent the ends 35 push against the fingers 42 of the inboard portion 30. When the hooks 34 are fully engaged, the fingers 42 snap back into position behind an adjacent hook 34. Specifically, at least one of the fingers 42 of the outboard portion 28 engages one of the bases 37 of the inboard portion 30. Additionally, at least one of the fingers 42 of the inboard portion 30 engages one of the bases 37 of the outboard portion 30. As such, the fingers 42 and the respective hooks 34 cooperate to secure the two portions 28, 30 together. As illustrated in the preferred embodiment, the identical portions 28, 30 are offset when interlocked such that only one finger 42 of each portion 28, 30 engages an opposing base 37. The engaged configuration of the fastener 26 is best shown in Figures 2 and 5.

To unlock the inboard portion 30 from the outboard portion 28 the user must bias the fingers 42 toward the back panel 32 to disengage the fingers 42 from the corresponding bases 37.

Referring to Figure 12, an alternative embodiment of the fastener 26 is shown wherein like numeral increased by 100 indicate like or corresponding parts. The alternative embodiment of Figure 12 includes a fastener 126, which differs primarily in the configuration of a locking device 140. The alternative locking device 140 includes a resilient locking finger 142 extending from a lower edge of one of an outboard 128 and inboard 130 portion. A notch 144 is formed in the other portion 130, 128 such that the finger 142 engages the notch 144 during the locking of the portions 128, 130. The locking finger 142 is preferably provided on the inboard portion 130 that engages the notch 144 within the outboard portion 128. The outboard 128 and inboard 130 portions of this alternative embodiment are therefore dissimilar. Due to the dissimilar nature of this alternative fastener 126, the portions 128, 130 are not reversible and can only be locking together in one way. This design therefore ensures that the fastener 126 is correctly interlocked each and every time.

Preferably, the finger 142 and notch 144 are formed between a plurality of adjacent J-shaped hooks 134. The finger 142 is biased to maintain locking engagement between the outboard 128 and inboard 130 portions. A cam 146 is provided on the locking tab 142 such that the two portions 128, 130 are easy to assemble by hand. In addition, the two portions 128, 130 may be of contrasting colors, such as black and white, respectively, which may assist in determining if the two portions 128, 130 are fully engaged and locked.

To unlock the two portions 128, 130, a user pushes on the finger 142 until the finger 142 disengages the notch 144. The inboard 130 and outboard 128 portions can now be pulled apart.

The invention has been described in an illustrative manner, and it is to be understood that the terminology as used is intended to be in the nature of words of description rather than of limitation. Many modifications and variations of the present invention are possible in light of the above teachings. It is, therefore, to be understood that within the scope of the appended claims the invention may be practiced otherwise than as specifically described.

## Claims

1. A seat assembly (10) for a vehicle comprising:
a seat frame (14),
a cover (16) covering said seat frame (14) and including at least one seam (18),
an air bag unit (11) supported by said seat frame (14) and disposed inside said cover (16), said air bag unit (11) including an air bag,
a pair of sheets (20) sandwiching said air bag therebetween, each of said sheets (20) having a first edge (22) connected to said seam (18) of said cover (16) and a second edge (24) supported by said seat frame (14),
a fastener (26) having outboard (28) and inboard (30) portions with said outboard portion (28) being connected to one of said second edges (24) and said inboard portion (30) being connected to the other of said second edges (24), said inboard portion (30) interconnected to said outboard portion (28) to support said second edges (24) on said seat frame (14), and
said outboard (28) and inboard (30) portions each including a back panel (32) extending in a strip between opposite ends (35) and a plurality of J-shaped hooks (34) disposed in side by side relationship between said opposite ends (35),
said assembly **characterized by** an alignment device disposed on at least one of said outboard (28) and inboard (30) portions to ensure that said J-shaped hooks (34) of said outboard portion (28) are aligned with said J-shaped hooks (34) of said inboard portion (30) when said J-shaped hooks (34) are interleaved with one another.

2. An assembly as set forth in claim 1 wherein each of said back panels (32) have upper and lower edges with said upper edge extending beyond said J-shaped hooks (34) to provide a flat connecting section (31) along said upper edge.

3. An assembly as set forth in claim 2 wherein said alignment device is further defined as slots (36) separating adjacent J-shaped hooks (34).

4. An assembly as set forth in claim 3 wherein said alignment device is further defined as support rib (38) extending from said back panel (32) and supporting each of said J-shaped hooks (34) in spaced relationship to said back panel (32).

5. An assembly as set forth in claim 4 wherein said support ribs (38) of said outboard portion (28) are disposed in said slots (36) of said inboard portion (30) and said support ribs (38) of said inboard portion (30) are disposed in said slots (36) of said outboard portion (28) when said J-shaped hooks (34) are interleaved with one another, thereby ensuring said alignment of said inboard (30) and outboard (28) portions.

6. An assembly as set forth in claim 5 wherein a corresponding first J-shaped hook (34) on both of said outboard (28) and inboard (30) portions includes a first width and a corresponding second J-shaped hook (34) on both of said outboard (28) and inboard (30) portions includes a second width with said second width being larger than said first width such that said second J-shaped hooks (34) are prevented from interleaving with said first J-shaped hooks (34), thereby further ensuring said alignment of said inboard (30) and outboard (28) portions.

7. An assembly as set forth in claim 5 wherein said inboard portion (30) includes a rib (38) at each of said opposite ends (35) of said back panel (32) to further ensure proper alignment of said inboard (30) and outboard (28) portions during said interleaving of said J-shaped hooks (34).

8. An assembly as set forth in claim 5 wherein each of said J-shaped hooks (34) include a base (37) for engaging opposing J-shaped hooks (34) of the opposite back panel (32).

9. An assembly as set forth in claim 8 wherein each of said ribs (38) is centrally located on each of said J-shaped hooks (34).

10. An assembly as set forth in claim 8 further including a mechanical locking device (40) disposed on at least one of said panels (32) of said portions (28, 30) for locking said outboard (28) and inboard (30) portions together.

11. An assembly as set forth in claim 10 wherein said locking device (40) includes at least one resilient locking finger (42) extending outwardly from at least one of said opposite ends (35) of each of said panels (32).

12. An assembly as set forth in claim 10 wherein said locking device (40) includes a resilient locking finger (42) extending from each of said opposite ends (35) at said upper edges of each of said panels (32).

13. An assembly as set forth in claim 12 wherein at least one of said locking fingers (42) of said outboard portion (28) engages one of said bases (37) of said inboard portion (30) while at least one of said locking fingers (42) of said inboard portion (30) engages one of said bases (37) of said outboard portion (30) during said locking of said portions (28, 30).

14. An assembly as set forth in claim 10 wherein said locking device (40) includes a resilient locking finger (42) extending from said lower edge of one of said portions (28, 30) with a notch (44) formed in said other of said portions (30, 28) such that said finger (42) engages said notch (44) during said locking of said portions (28, 30).

15. An assembly as set forth in claim 14 wherein said finger (42) and said notch (44) are formed between said plurality of J-shaped hooks (34).

16. An assembly as set forth in claim 1 further including a mechanical locking device (40) disposed on at least one of said panels (32) of said portions (28, 30) for locking said outboard (28) and inboard (30) portions together.

17. An assembly as set forth in claim 16 wherein said locking device (40) includes at least one resilient locking finger (42) extending outwardly from at least one of said opposite ends (35) of each of said panels (32).

18. An assembly as set forth in claim 16 wherein said locking device (40) includes a resilient locking finger (42) extending from one of said portions (28, 30) with a notch (44) formed in said other of said portions (30, 28) such that said finger (42) engages said notch (44) during said locking of said portions (28, 30)

19. An assembly as set forth in claim 1 wherein said alignment device is further defined as locking finger (42) extending from one of said portions (28, 30).

## Patentansprüche

1. Sitzanordnung (10) für ein Fahrzeug, mit:
einem Sitzrahmen (14),
einem Bezug (16), der den Sitzrahmen (14) abdeckt und wenigstens eine Naht (18) aufweist,
einer Airbag-Einheit (11), die von dem Sitzrahmen (14) gestützt wird und innerhalb des Bezugs (16) angeordnet ist, wobei die Airbag-Einheit (11) einen Airbag umfasst,
einem Paar Schichten (20), zwischen denen der Airbag eingebettet ist, wobei jede der Schichten (20) eine erste Kante (22), die mit der Naht (18) des Bezugs (16) verbunden ist, und eine zweite Kante (24), die von dem Sitzrahmen (14) gestützt wird, aufweist,
einer Befestigungseinrichtung (26), die einen äußeren Abschnitt (28) und einen inneren Abschnitt (30) aufweist, wobei der äußere Abschnitt (28) mit einer der zweiten Kanten (24) verbunden ist und der innere Abschnitt (30) mit der anderen der zweiten Kanten (24) verbunden ist, wobei der innere Abschnitt (30) mit dem äußeren Abschnitt (28) verbunden ist, um die zweiten Kanten (24) an dem Sitzrahmen (14) zu stützen, und
wobei der äußere Abschnitt (28) und der innere Abschnitt (30) jeweils eine Gegenplatte (32), die sich als Streifen zwischen gegenüberliegenden Enden (35) erstreckt, und mehrere J-förmige Haken (34), die nebeneinander zwischen den gegenüberliegenden Enden (35) angeordnet sind, umfassen,
wobei die Anordnung **gekennzeichnet ist durch** eine Ausrichtvorrichtung, die an dem äußeren Abschnitt (28) und/oder an dem inneren Abschnitt angeordnet ist und sicherstellt, dass die J-förmigen Haken (34) des äußeren Abschnitts (28) auf die J-förmigen Haken (34) des inneren Abschnitts (30) ausgerichtet sind, wenn die J-förmigen Haken (34) miteinander verzahnt sind.

2. Anordnung nach Anspruch 1, bei der jede der Gegenplatten (32) eine obere und eine untere Kante aufweist, wobei sich die obere Kante über die J-förmigen Haken (34) hinaus erstreckt, um einen flachen Verbindungsabschnitt (31) längs der oberen Kante zu schaffen.

3. Anordnung nach Anspruch 2, bei der die Ausrichtvorrichtung des weiteren durch Schlitze (36) definiert ist, die benachbarte J-förmige Haken (34) trennen.

4. Anordnung nach Anspruch 3, bei der die Ausrichtvorrichtung des weiteren durch eine Unterstützungsrippe (38) definiert ist, die sich von der Gegenplatte (32) erstreckt und jeden der J-förmigen Haken (34) in einer Abstandsbeziehung zu der Gegenplatte (32) stützt.

5. Anordnung nach Anspruch 4, bei der die Unterstützungsrippen (38) des äußeren Abschnitts (28) in den Schlitzen (36) des inneren Abschnitts (30) angeordnet sind und die Unterstützungsrippen (38) des inneren Abschnitts (30) in den Schlitzen (36) des äußeren Abschnitts (28) angeordnet sind, wenn die J-förmigen Haken (34) miteinander verzahnt sind, wodurch die Ausrichtung des inneren Abschnitts (30) und des äußeren Abschnitts (28) gewährleistet ist.

6. Anordnung nach Anspruch 5, bei der ein entsprechender erster J-förmiger Haken (34) sowohl an dem äußeren Abschnitt (28) als auch an dem inneren Abschnitt (30) eine erste Breite aufweist und ein entsprechender zweiter J-förmiger Haken (34) sowohl an dem äußeren Abschnitt (28) als auch an dem inneren Abschnitt (30) eine zweite Breite aufweist, wobei die zweite Breite größer als die erste Breite ist, derart, dass die zweiten J-förmigen Haken (34) daran gehindert werden, sich mit den ersten J-förmigen Haken (34) zu verzahnen, wodurch zusätzlich die Ausrichtung des inneren Abschnitts (30) und des äußeren Abschnitts (28) gewährleistet ist.

7. Anordnung nach Anspruch 5, bei der der innere Abschnitt (30) an jedem gegenüberliegenden Ende (35) der Gegenplatte (32) eine Rippe (38) umfasst, um zusätzlich die richtige Ausrichtung des inneren Abschnitts (30) und des äußeren Abschnitts (28) während des Verzahnens der J-förmigen Haken (34) zu gewährleisten.

8. Anordnung nach Anspruch 5, bei der jeder der J-förmigen Haken (34) eine Basis (37) für den Eingriff gegenüberliegender J-förmiger Haken (34) der gegenüberliegenden Gegenplatte (32) umfasst.

9. Anordnung nach Anspruch 8, bei der jede der Rippen (38) an jedem der J-förmigen Haken (34) mittig angeordnet ist.

10. Anordnung nach Anspruch 8, des weiteren mit einer mechanischen Verriegelungsvorrichtung (40), die an mindestens einer der Platten (32) der Abschnitte (28, 30) angeordnet ist, um den äußeren Abschnitt (28) und den inneren Abschnitt (30) miteinander zu verriegeln.

11. Anordnung nach Anspruch 10, bei der die Verriegelungsvorrichtung (40) mindestens einen elastischen Verriegelungsfinger (42) aufweist, der sich von mindestens einem der gegenüberliegenden Enden (35) jeder der Platten (32) nach außen erstreckt.

12. Anordnung nach Anspruch 10, bei der die Verriegelungsvorrichtung (40) einen elastischen Verriegelungsfinger (42) aufweist, der sich von jedem der gegenüberliegenden Enden (35) an den oberen Kanten jeder der Platten (32) erstreckt.

13. Anordnung nach Anspruch 12, bei der während der Verriegelung der Abschnitte (28, 30) mindestens einer der Verriegelungsfinger (42) des äußeren Abschnitts (28) mit einer der Basen (37) des inneren Abschnitts (30) in Eingriff ist und mindestens einer der Verriegelungsfinger(42) des inneren Abschnitts (30) mit einer der Basen (37) des äußeren Abschnitts (30) in Eingriff ist.

14. Anordnung nach Anspruch 10, bei der die Verriegelungsvorrichtung (40) einen elastischen Verriegelungsfinger (42) aufweist, der sich von der unteren Kante eines der Abschnitte (28, 30) erstreckt, wobei in dem anderen der Abschnitte (30, 28) eine Kerbe (44) ausgebildet ist, derart, dass der Finger (42) mit der Kerbe (44) während der Verriegelung der Abschnitte (28, 30) in Eingriff ist.

15. Anordnung nach Anspruch 14, bei der der Finger (42) und die Kerbe (44) zwischen den mehreren J-förmigen Haken (34) ausgebildet sind.

16. Anordnung nach Anspruch 1, mit des weiteren einer mechanischen Verriegelungsvorrichtung (40), die an mindestens einer der Platten (32) der Abschnitte (28, 30) angeordnet ist, um den äußeren Abschnitt (28) und den inneren Abschnitt (30) miteinander zu verriegeln.

17. Anordnung nach Anspruch 16, bei der die Verriegelungsvorrichtung (40) mindestens einen elastischen Verriegelungsfinger (42) aufweist, der sich von mindestens einem der gegenüberliegenden Enden (35) jeder der Platten (32) nach außen erstreckt.

18. Anordnung nach Anspruch 16, bei der die Verriegelungsvorrichtung (40) einen elastischen Verriegelungsfinger (42) aufweist, der sich von einem der Abschnitte (28, 30) erstreckt, wobei in dem anderen der Abschnitte (30, 28) eine Kerbe (44) ausgebildet ist, derart, dass der Finger (42) mit der Kerbe (44) während der Verriegelung der Abschnitte (28, 30) in Eingriff ist.

19. Anordnung nach Anspruch 1, bei der die Ausrichtvorrichtung des weiteren als Verriegelungsfinger (42) definiert ist, der sich von einem der Abschnitte (28, 30) erstreckt.

## Revendications

1. Ensemble formant siège (10) pour un véhicule, comprenant:
un châssis de siège (14),
un recouvrement (16) couvrant ledit châssis de siège (14) et incluant au moins une couture (18),
une unité à airbag (11) supportée par ledit châssis de siège (14) et disposée à l'intérieur dudit recouvrement (16), ladite unité à airbag (11) incluant un airbag,
une paire de feuilles (20) prenant en sandwich ledit airbag entre elles, chacune desdites feuilles (20) ayant une première bordure (22) connectée à ladite couture (18) dudit recouvrement (16) et une seconde bordure (24) supportée par ledit châssis de sièges (14),
un moyen de fixation (26) ayant une portion extérieure (28) et une portion intérieure (30), ladite portion extérieure (28) étant connectée à l'une desdites secondes bordures (24) et ladite portion intérieure (30) étant connectée à l'autre desdites secondes bordures (24), ladite portion intérieure (30) étant interconnectée à ladite portion extérieure (28) pour supporter lesdites secondes bordures (24) sur ledit châssis de siège (14), et
ladite portion extérieure (28) et ladite portion intérieure (30) incluant chacune un panneau postérieur (32) qui s'étend sous forme d'une bande entre des extrémités opposées (35) et une pluralité de crochets (34) en forme de J disposés en relation côte à côte entre lesdites extrémités opposées (35),
ledit ensemble étant **caractérisé par** un dispositif d'alignement disposé sur l'une au moins parmi ladite portion extérieure (28) et ladite portion intérieure (30) pour assurer que lesdits crochets en forme de J (34) de ladite portion extérieure (28) soient alignés avec lesdits crochets en forme de J (34) de ladite portion intérieure (30) quand lesdits crochets en forme de J (34) sont entremêlés les uns avec les autres.

2. Ensemble selon la revendication 1, dans lequel chacun desdits panneaux postérieurs (32) comprend une bordure supérieure et une bordure inférieure, ladite bordure supérieure s'étendant au-delà desdits crochets en forme de J (34) pour réaliser un tronçon de connexion plat (31) le long de ladite bordure supérieure.

3. Ensemble selon la revendication 2, dans lequel ledit dispositif d'alignement est en outre défini sous la forme de fentes (36) séparant des crochets en forme de J (34) adjacents.

4. Ensemble selon la revendication 3, dans lequel ledit dispositif d'alignement est en outre défini sous la forme d'une nervure de support (38) s'étendant depuis ledit panneau postérieur (32) et supportant chacun desdits crochets en forme de J (34) en relation espacée par rapport audit panneau postérieur (32).

5. Ensemble selon la revendication 4, dans lequel lesdites nervures de support (38) de ladite portion extérieure (28) sont disposées dans lesdites fentes (36) de ladite portion intérieure (30), et lesdites nervures de support (38) de ladite portion intérieure (30) sont disposées dans lesdites fentes (36) de ladite portion extérieure (28) quand lesdits crochets en forme de J (34) sont entremêlés les uns avec les autres, assurant grâce à cela ledit alignement de ladite portion intérieure (30) et de ladite portion extérieure (28).

6. Ensemble selon la revendication 5, dans lequel un premier crochet en forme de J (34) correspondant à la fois de ladite portion extérieure (28) et de ladite portion intérieure (30) inclut une première largeur et un second crochet en forme de J (34) correspondant à la fois de ladite portion extérieure (28) et de ladite portion intérieure (30) inclut une seconde largeur, ladite seconde largeur étant plus élevée que ladite première largeur, de telle façon que lesdits seconds crochets en forme de J (34) sont empêchés de s'entremêler avec lesdits premiers crochets en forme de J (34), assurant ainsi en outre ledit alignement de ladite portion intérieure (30) et de ladite portion extérieure (28).

7. Ensemble selon la revendication 5, dans lequel ladite portion intérieure (30) inclut une nervure (38) à chacune desdites extrémités opposées (35) dudit panneau postérieur (32) pour assurer en outre un alignement correct de ladite portion intérieure (30) et de ladite portion extérieure (28) pendant l'entremêlement desdits crochets en forme de J (34).

8. Ensemble selon la revendication 5, dans lequel chacun desdits crochets en forme de J (34) inclut une base (37) pour engager des crochets en forme de J (34) opposés du panneau postérieur opposé (32).

9. Ensemble selon la revendication 8, dans lequel chacune desdites nervures (38) est située au centre sur chacun desdits crochets en forme de J (34).

10. Ensemble selon la revendication 8, incluant en outre un dispositif de verrouillage mécanique (40) disposé sur l'un au moins desdits panneaux (32) desdites portions (28, 30) pour verrouiller ensemble ladite portion extérieure (28) et ladite portion intérieure (30).

11. Ensemble selon la revendication 10, dans lequel ledit dispositif de verrouillage (40) inclut au moins un doigt de verrouillage élastique (42) qui s'étend vers l'extérieur depuis au moins une desdites extrémités opposées (35) de chacun desdits panneaux (32).

12. Ensemble selon la revendication 10, dans lequel ledit dispositif de verrouillage (40) inclut un doigt de verrouillage élastique (42) qui s'étend depuis chacune desdites extrémités opposées (35) au niveau desdites bordures supérieures de chacun desdits panneaux (32).

13. Ensemble selon la revendication 12, dans lequel l'un au moins desdits doigts de verrouillage (42) de ladite portion extérieure (28) engage l'une desdites bases (37) de ladite portion intérieure (30) alors que l'un au moins desdits doigts de verrouillage (42) de ladite portion intérieure (30) engage l'une desdites bases (37) de ladite portion extérieure (30) pendant ledit verrouillage desdites portions (28, 30).

14. Ensemble selon la revendication 10, dans lequel ledit dispositif de verrouillage (40) inclut un doigt de verrouillage élastique (42) qui s'étend depuis ladite bordure inférieure de l'une desdites portions (28, 30) avec une encoche (44) formée dans ladite autre portion (30, 28) de sorte que ledit doigt (42) engage ladite encoche (44) pendant ledit verrouillage desdites portions (28, 30).

15. Ensemble selon la revendication 14, dans lequel ledit doigt (42) et ladite encoche (44) sont formés entre ladite pluralité de crochets en forme de J (34).

16. Ensemble selon la revendication 1, incluant en outre un dispositif de verrouillage mécanique (40) disposé sur l'un au moins desdits panneaux (32) desdites portions (28, 30) pour verrouiller ensemble ladite portion extérieure (28) et ladite portion intérieure (30).

17. Ensemble selon la revendication 16, dans lequel ledit dispositif de verrouillage (40) inclut au moins un doigt de verrouillage élastique (42) qui s'étend vers l'extérieur depuis au moins une desdites extrémités opposées (35) de chacun desdits panneaux (32).

18. Ensemble selon la revendication 16, dans lequel ledit dispositif de verrouillage (40) inclut un doigt de verrouillage élastique (42) qui s'étend depuis l'une desdites portions (28, 30) avec une encoche (44) formée dans l'autre desdites portions (30, 28) de telle façon que ledit doigt (42) engage ladite encoche (44) pendant ledit verrouillage desdites portions (28, 30).

19. Ensemble selon la revendication 1, dans lequel ledit dispositif d'alignement est en outre défini comme un doigt de verrouillage (42) s'étendant depuis l'une desdites portions (28, 30).
